(19) Europäisches Patentamt
European Patent Office
Office européen des brevets

(11) **EP 4 259 585 B1**

(12) **EUROPEAN PATENT SPECIFICATION**

(45) Date of publication and mention
of the grant of the patent:
**21.01.2026 Bulletin 2026/04**

(21) Application number: **21830871.6**

(22) Date of filing: **01.12.2021**

(51) International Patent Classification (IPC):
**C03B 23/023** (2006.01)

(52) Cooperative Patent Classification (CPC):
**C03B 23/023**

(86) International application number:
**PCT/US2021/061352**

(87) International publication number:
**WO 2022/125349 (16.06.2022 Gazette 2022/24)**

(54) **OPTIMIZED SHAPE FOR IMPROVED PERFORMANCE AND RELIABILITY FOR GLASS ARTICLES MADE WITH COLD FORM METHOD**

OPTIMIERTE FORM FÜR VERBESSERTE LEISTUNG UND ZUVERLÄSSIGKEIT VON MIT KALTFORMVERFAHREN HERGESTELLTEN GLASARTIKELN

FORME OPTIMISÉE POUR PERFORMANCE ET FIABILITÉ AMÉLIORÉES POUR ARTICLES EN VERRE FABRIQUÉS AVEC UN PROCÉDÉ DE FORMAGE À FROID

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2020 US 202063122664 P**

(43) Date of publication of application:
**18.10.2023 Bulletin 2023/42**

(73) Proprietor: **Corning Incorporated**
**Corning, New York 14831 (US)**

(72) Inventors:
• **BURDETTE, Steven Roy**
**Big Flats, New York 14814 (US)**
• **DAVE, Gaurav**
**Painted Post, New York 14870 (US)**
• **GALGALIKAR, Rohan Ram**
**Painted Post, New York 14870 (US)**
• **LAYOUNI, Khaled**
**77300 Fontainebleau (FR)**
• **TIMMONS, Christopher Lee**
**Big Flats, New York 14814 (US)**

(74) Representative: **Epping - Hermann - Fischer**
**Patentanwaltsgesellschaft mbH**
**Schloßschmidstraße 5**
**80639 München (DE)**

(56) References cited:
**WO-A1-2017/218652      WO-A1-2018/075853**
**US-A1- 2018 188 869**

**Description**

**CROSS-REFERENCE TO RELATED APPLICATIONS**

This application claims the benefit of priority under 35 U.S.C §120 of U.S. Provisional Application Serial No. 63/122,664 filed on December 8, 2020.

**BACKGROUND**

The disclosure relates to a curved glass article and, more particularly, to a curved glass article having a variable radius of curvature that increases from a vertex to an edge of the glass article.

Vehicle interiors include curved surfaces and can incorporate displays in such curved surfaces. The materials used to form such curved surfaces are typically limited to polymers, which do not exhibit the durability and optical performance as glass. As such, curved glass sheets are desirable, especially when used as covers for displays. Existing methods of forming such curved glass sheets, such as thermal forming, have drawbacks including high cost, optical distortion, and surface marking. Additionally, to meet manufacturing demands, several forming apparatuses are needed for each processing line, and because of the number of forming apparatuses needed, the forming apparatuses are preferably relatively inexpensive to manufacture and use. Accordingly, Applicant has identified a need for vehicle interior systems that can incorporate a curved glass sheet in a cost-effective manner and without problems typically associated with glass thermal forming processes. WO 2018/075853 A1 relates to a process that comprises applying an adhesive layer to a substrate having a developable shape. The process further comprises initially applying a force to press a thin glass layer against the adhesive layer along a generation line. The generation line moves across the substrate to cold-form the thin glass layer into the shape of the substrate, while maintaining the application of force on areas of the substrate over which the generation line has passed. The application of force is maintained on areas of the substrate over which the generation line has passed until the adhesive cures. US 2018/188869 A1 relates to a vehicle interior system that includes a base with a curved surface, and a display or touch panel disposed on the curved surface. The display includes a cold-bent glass substrate with a thickness of 1.5 mm or less and a first radius of curvature of 20 mm or greater, and a display module and/or touch panel attached to the glass substrate having a second radius of curvature that is within 10% of the first radius of curvature. WO 2017/218652 A1 relates to a glass sheet. A local bend is formed in the glass sheet by supporting large flat areas of the glass sheet on large flat supports that are articulated relative to each other while leaving an area of the glass sheet in which the local bend is to be formed unsupported. A combination of bending forces applied to the glass sheet by articulation of the large flat supports and local heating of the unsupported area of the glass sheet produces the local bend.

**SUMMARY**

The invention relates to a glass article according to claim 1 and to a method of forming a glass article according to claim 8. According to an aspect, embodiments of the disclosure relate to a glass article. The glass article includes a cold-formed glass sheet having a first major surface and a second major surface. The second major surface is opposite to the first major surface. The first major surface defines a variable curvature having a vertex, a first edge spatially disposed in a first direction from the vertex, a second edge spatially disposed from the vertex in a second direction opposite to the first direction, a first flat tip region, and a second flat tip region. The first edge is positioned between the vertex and the first flat tip region, and the second edge is positioned between the vertex and the second flat tip region. The variable curvature has a first radius of curvature at the vertex, a second radius of curvature at the first edge, and a third radius of curvature at the second edge. Both of the second radius of curvature and the third radius of curvature are greater than the first radius of curvature.

According to still another aspect, embodiments of the disclosure relate to a method of forming a glass article. In the method, a glass sheet is positioned over a process chuck. The glass sheet has a first major surface and a second major surface opposite to the first major surface. The process chuck includes a forming surface defining a variable curvature. The glass sheet is positioned such that the first major surface is facing the forming surface. The glass sheet is bent over the process chuck so that the glass sheet conforms to the variable curvature of the process chuck. A frame is attached to the glass sheet via an adhesive layer to maintain the variable curvature in the glass sheet. The variable curvature in the glass sheet has a minimum radius of curvature at a vertex of the variable curvature and regions on each side of the vertex having a radius of curvature greater than the minimum radius of curvature.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims.

The accompanying drawings are included to provide a further understanding, and are incorporated in and constitute a part of this specification. The drawings illustrate one or more embodiment(s), and together with the description serve to explain principles and operation of the various embodiments.

**BRIEF DESCRIPTION OF THE DRAWINGS**

FIG. 1 is a perspective view of a vehicle interior with vehicle interior systems, according to exemplary embodiments.

FIGS. 2A and 2B depict a V-shaped and a C-shaped curved glass article, respectively according to an exemplary embodiment.

FIG. 3 depicts an exploded perspective view of a glass article and process chuck, according to an exemplary embodiment.

FIGS. 4A-4C provide a comparison between a constant radius curvature and a variable radius curvature, according to an exemplary embodiment.

FIG. 5 depicts a top and side view of a V-shaped glass article having a variable radius curvature between flat sections, according to an exemplary embodiment.

FIG. 6 depicts a graph of a variable radius curvature profile compared to a constant radius curvature profile, according to an exemplary embodiment.

FIG. 7 depicts the shape deviations of the glass sheets having a variable radius curvature and a constant radius curvature, according to an exemplary embodiment.

FIG. 8 depicts the stress profile in the adhesive layer for a glass article having a variable radius curvature and for a glass article having a constant radius curvature, according to an exemplary embodiment.

FIG. 9 depicts a top and a side view of a C-shaped glass article having a variable radius curvature, according to an exemplary embodiment.

FIG. 10 depicts an embodiment of a variable radius curvature glass article having a bumper located in the adhesive layer, according to an exemplary embodiment.

FIGS. 11A-11D depict modeled shape deviation and light leakage for a constant radius curvature glass article (FIGS. 11A and 11B) and for a variable radius curvature glass article (FIG. 11C and 11D), according to exemplary embodiments.

FIG. 12 depicts a graph of the shape deviation as a function of adhesive modulus for a constant radius curvature glass article and a variable radius curvature glass article.

FIG. 13 depicts geometric dimensions of a glass sheet, according to an exemplary embodiment.

**DETAILED DESCRIPTION**

Reference will now be made in detail to various embodiments, examples of which are illustrated in the accompanying drawings. In general, the present disclosure is directed to a curved glass article having a glass sheet with a variable radius curvature. As will be described herein, the radius of curvature increases as the distance from the vertex of the curvature increases. The radius of curvature may increase continuously or discontinuously. In a particular embodiment in which the radius increases continuously, the radius of curvature increases according to a polynomial function of at least the third degree. The variable radius curvature reduces the stress on the adhesive layer holding the glass article in the curved configuration against a support frame. Additionally, the variable radius curvature exhibits small shape deviations (e.g., 100 $\mu$m or less) in flat tip regions on the sides of the curvature, which reduces light leakage and improves black uniformity on displays mounted to the glass sheet. These and other aspects and advantages will be described in relation to the embodiments provided below and in the drawings. These embodiments are presented by way of example and not by way of limitation.

In order to provide context for the glass article and the process of forming the glass article described herein, exemplary embodiments of curved glass articles will be described in relation to the particular application of a vehicle interior system.

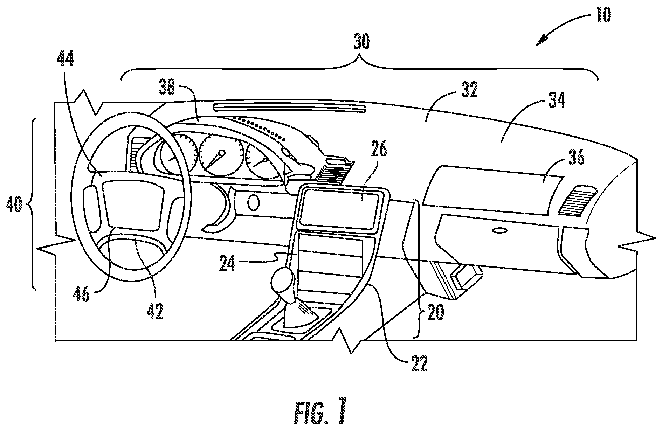

FIG. 1 shows an exemplary interior 10 of a vehicle that includes three different embodiments of vehicle interior systems 20, 30, 40. Vehicle interior system 20 includes a base, shown as center console base 22, with a curved surface 24 including a display 26. Vehicle interior system 30 includes a base, shown as dashboard base 32, with a curved surface 34 including a display 36. The dashboard base 32 typically includes an instrument panel 38 which may also include a display. Vehicle interior system 40 includes a base, shown as steering wheel base 42, with a curved surface 44 and a display 46. In one or more embodiments, the vehicle interior system includes a base that is an arm rest, a pillar, a seat back, a floor board, a headrest, a door panel, or any portion of the interior of a vehicle that includes a curved surface.

The embodiments of the curved glass articles described herein can be used in each of vehicle interior systems 20, 30, 40, among others. In such embodiments, the glass article discussed herein may include a cover glass sheet that also covers non-display surfaces of the dashboard, center console, steering wheel, door panel, etc. In such embodiments, the glass material may be selected based on its weight, aesthetic appearance, etc. and may be provided with a coating (e.g., an ink or pigment coating) including a pattern (e.g., a brushed metal appearance, a wood grain appearance, a leather appearance, a colored appearance, etc.) to visually match the glass components with adjacent non-glass components. In specific embodiments, such ink or pigment coating may have a transparency level that provides for deadfront or color matching functionality when the display 26, 36, 38, 46 is inactive. Further, while the vehicle interior of FIG. 1 depicts a vehicle in the form of an automobile (e.g., cars, trucks, buses and the like), the glass articles disclosed herein can be incorporated into other vehicles, such as trains, sea craft (boats, ships, submarines, and the like), and aircraft (e.g., drones, airplanes, jets, helicopters and the like).

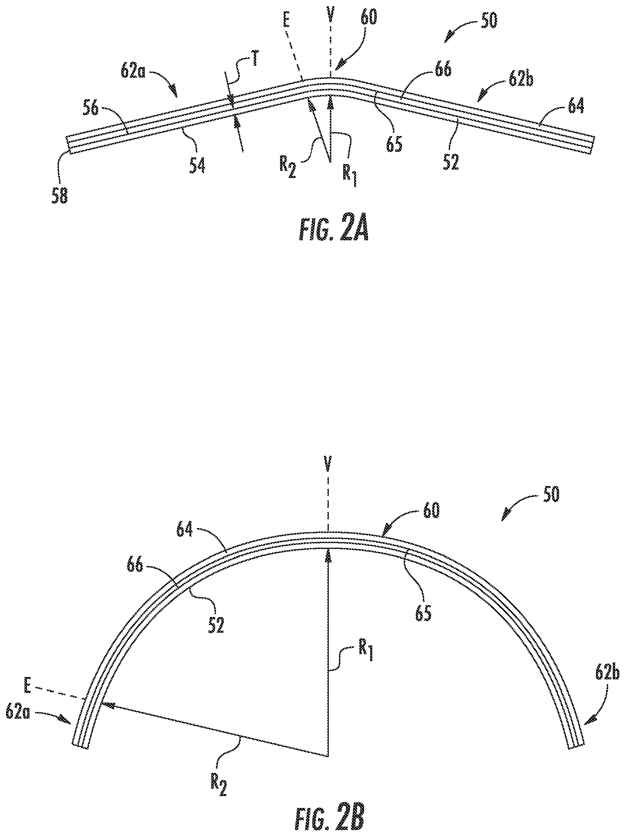

In embodiments, the curved surfaces 24, 34, 44 can be any of a variety of curved shapes, such as V-shaped or C-shaped as shown in FIGS. 2A and 2B, respectively. Referring first to FIG. 2A, a side view of an embodiment of a V-shaped glass article 50 is shown. The glass article 50 includes a glass sheet 52 having a first major surface 54, a second major surface 56 opposite to the first major surface 54, and a minor surface 58 joining the first major surface 54 to the second major surface 56. The first major surface 54 and the second major surface 56 define a thickness T of the glass sheet 52. In embodiments, the thickness T of the glass sheet 52 is from 0.3 mm to 2 mm, in particular 0.5 mm to 1.1 mm. In a vehicle, the first major surface 54 faces the occupants of the vehicle.

In embodiments, the first major surface 54 and/or the second major surface 56 includes one or more surface treatments. Examples of surface treatments that may be applied to one or both of the first major surface 54 and second major surface 56 include at least one of an anti-glare coating, an anti-reflective coating, a coating providing touch functionality, a decorative (e.g., ink or pigment) coating, or an easy-to-clean coating.

As can be seen in FIG. 2A, the glass sheet 52 has a curved region 60 disposed between a first flat section 62a and a second flat section 62b. As disclosed herein, the curved region 60 has a variable radius of curvature that transitions from a first radius of curvature $R_1$ at a vertex V of the curved region 60 to a second radius of curvature $R_2$ at an edge E of the curved region 60. As will be discussed more fully below, the second radius of curvature $R_2$ is greater than the first radius of curvature $R_1$. Further, in embodiments, the radius of curvature may change continuously from the first radius of curvature $R_1$ to the second radius of curvature $R_2$ as the distance from the vertex V increases. In other embodiments, the radius of curvature changes discontinuously, e.g., in a stepped manner, between the first radius of curvature $R_1$ to the second radius of curvature $R_2$. For example, the radius of curvature may extend from the vertex V toward an edge E in a first section at the first radius of curvature $R_1$, transition to the second radius of curvature $R_2$ for a second section, and then, optionally, transition to one or more further radii of curvature over one or more further sections as the distance from the vertex V increases. In such embodiments, a transition region may be present between each section having its respective radius of curvature.

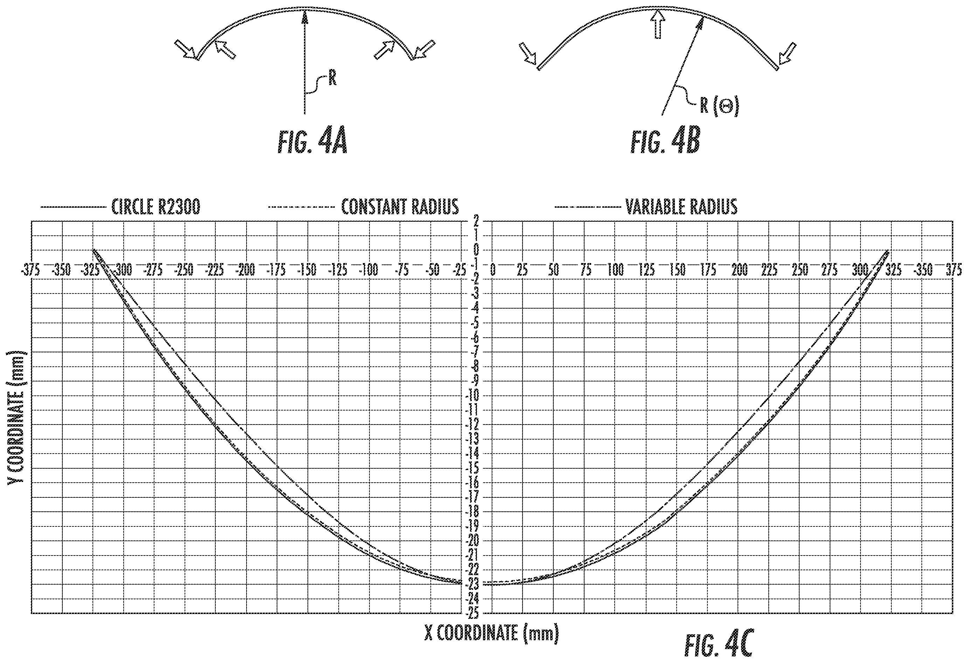

In a particular embodiment, the radius of curvature changes continuously from the first radius of curvature $R_1$ to the second radius of curvature $R_2$, and the radius of curvature is based on a polynomial function of at least the third degree. In particular, the coordinates of a curvature on the first major surface 54 in the x-y coordinate plane are given by a function having the general form of $A_n x^n + A_{n-1} x^{n-1} + ... + A_1 x + A_0 = y$, in which n is greater than or equal to 3. For a cubic function (e.g., as shown in FIG. 4C which has a vertex V at x = 0), the form is $A_3 x^3 + A_2 x^2 + A_1 x + A_0 = y$, and the radius of curvature R for the cubic equation is given by:

$$R = \frac{(1 + (y')^2)^{1.5}}{|y''|}$$

in which y' is the first derivative of the cubic function and y" is the second derivative of the cubic function. The function for the radius of curvature $R_1$ at the vertex V simplifies to:

$$R_1 = \frac{(1 + A_1^2)^{1.5}}{|2A_2|}$$

At the edge E of the curved region 60, the second radius of curvature $R_2$ approaches flat (e.g., a radius of curvature of at least 10 m) and transitions into the flat sections 62a, 62b. As will be discussed more fully below, the transition regions between the edge E of the curvature 60 and the flat sections 62a, 62b are referred to as "flat tip regions." Advantageously, the variable curvature disclosed herein allows for the size of the flat tip regions to be decreased as compared to flat tip regions produced by constant curvatures. In embodiments, the flat tip regions are 10 mm or less in width, in particular 5 mm or less, more particularly 3 mm or less, and most particularly, 1 mm or less. Further, as shown in FIG. 2A, the curved region 60 defines a concave curve with respect to the first major surface 54, but in other embodiments, the curved region 60 is instead a convex curve with respect to the first major surface 54.

In the glass article 50 of FIG. 2A, a frame 64 is adhered to the second major surface 56 of the glass sheet 52. The frame 64 is attached to the glass sheet 52 via an adhesive layer 66. In embodiments, the adhesive layer 66 joining the frame 64 to the glass sheet 52 is a structural adhesive, such as at least one of a toughened epoxy, a flexible epoxy, an acrylic, a silicone, a urethane, a polyurethane, or a silane modified polymer. In embodiments, the adhesive layer 66 has a thickness of 2 mm or less between the frame 64 and the glass sheet 52.

In part, the frame 64 facilitates mounting the glass article 50 to a vehicle interior base (such as center console base 22, dashboard base 32, and/or steering wheel base 42 as shown in FIG. 1). Additionally, the frame 64 has a curved frame support surface 65 that holds the glass sheet 52 in its curved shape (at least in the curved region 60) via the bond created by the adhesive layer 66. In embodiments, the glass sheet 52 is formed in such a way that the curved region 60 is not permanent. That is, the glass sheet 52 would spring back to a planar, non-curved (i.e., flat) configuration if the glass sheet 52 was not adhered to the frame 64. Thus, the glass sheet 52 is stressed to produce the curvature and remains stressed during the life of the glass article 50.

FIG. 2B depicts another embodiment of a glass article 50, in particular a C-shaped glass article 50. As compared to the V-shaped glass article 50 of FIG. 2A, the C-shaped glass article 50 of FIG. 2B has a larger curved region 60 and shorter flat sections 62a, 62b. The V-shape and C-shape are but two examples of curved glass articles 50 that can be provided with a curvature having a variable radius of curvature according to the present disclosure. In other embodiments, the glass articles 50 can include curved regions 60 having opposing curvatures to create an S-shape, a curved region 60 followed by a flat section 62a to create a J-shape, and curved regions 60 separated by a flat section 62a to create a U-shape, among others. Additionally, though the curved regions 60 shown in FIGS. 2A and 2B are depicted as symmetrical about the vertex V, in other embodiments the curved regions 60 are not symmetrical about the vertex V, e.g., the curvature may extend more in one direction than the other on opposite sides of the vertex V.

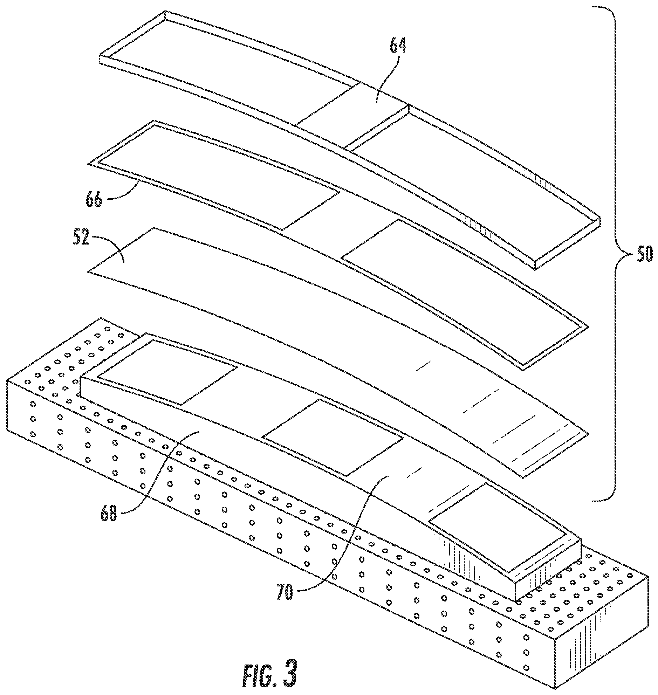

In embodiments, the glass articles 50 according to the present disclosure are formed by cold-forming techniques. In general, the process of cold-forming involves application of a bending force to the glass sheet 52 while the glass sheet 52 is situated on a chuck 68 as shown in the exploded view of FIG. 3. As can be seen, the chuck 68 has a curved forming surface 70, and the glass sheet 52 is bent into conformity with the curved forming surface 70. Advantageously, it is easier to apply surface treatments to a flat glass sheet 52 prior to creating the curvature in the glass sheet 52, and cold-forming allows the treated glass sheet 52 to be bent without destroying the surface treatment (as compared to the tendency of high temperatures associated with hot-forming techniques to destroy surface treatments, which requires surface treatments to be applied to the curved article in a more complicated process). In embodiments, the cold forming process is performed at a temperature less than the softening temperature of the glass composition of the glass sheet 52. In particular, the cold forming process may be performed at room temperature (e.g., about 20 °C) or a slightly elevated temperature, e.g., at 200 °C or less, 150 °C or less, 100 °C or less, or at 50 °C or less, which may assist with curing of the adhesive layer 66.

In designing the glass articles 50 according to the present disclosure, it is desirable to minimize the bonding area of the adhesive layer 66 and maximize the area available for a display. The decrease in bonding area generally puts the adhesive layer 66 under greater stress for a given glass curvature, yet the adhesive layer 66 must still withstand the typical environmental and operational stresses. Further, using an adhesive having a higher elastic or shear modulus may not always be possible, and thus, according to the present disclosure, the curvature of the glass sheet 52 is used to minimize the stress in the adhesive layer 66 while only minimally affecting the shape of the glass article 50. As discussed above, the change in curvature of the glass sheet 52 defines a curve having a radius of curvature $R_2$ at the edges that is larger than the radius of curvature $R_1$ at the vertex of the curve. Conventionally, glass articles are produced with a constant radius of curvature across each curve. However, the variable and increasing radius of curvature according to the present disclosure is able to reduce stress in the adhesive layer 66, improving reliability of the glass article 50, allowing for tighter bending radii in the curved regions 60, and reducing light leakage in display areas of the glass article 50.

FIGS. 4A-4C provide a comparison of a conventional constant radius curvature and the presently disclosed variable radius curvature. In particular, FIG. 4A depicts a constant radius curvature, which can be conceptualized as a four-point bend curve with opposing points of contacts shown toward the edge of the glass sheet. Because the opposing forces creating the curvature in the four-point bend curve are concentrated at the edges of the curvature, a bending moment is created. As will be discussed below, this bending moment creates deviation from planar in the flat tip region, which in turn can cause light leakage in a display positioned adjacent to the flat tip region. FIG. 4B depicts the variable radius curvature according to the present disclosure, and the particular embodiment shown is a cubic (polynomial function of the third degree) curvature. This variable radius curvature can be conceptualized as a three-point bend with two points of contact at the edges of the glass sheet and one opposing point of contact at the midpoint of the curvature. As compared to the four-point bend, the opposing forces are spread further apart, substantially reducing or eliminating the bending moment.

The difference in shape between the constant radius curvature of FIG. 4A and the variable (cubic) radius of curvature of FIG. 4B can be seen in the graph of FIG. 4C. Because the radius of curvature for the presently disclosed curved glass article 50 is variable, a single radius of curvature does not describe the curve (unlike the curvature of the constant radius curve, which can be described in terms of the single radius of curvature). Thus, to compare the curves, each curve considered a symmetrical curve having a maximum deflection of 23 mm from planar at the vertex (i.e., vertex coordinate of (0, -23)). As can be seen in FIG. 4C, a circle with a radius of 2300 mm is plotted over a span of 650 mm (y-axis). It should be noted that the scale of the x- and y- axes is not the same, which means that the arc of the circular plot does not appear circular. The constant radius curve, also having a radius of curvature of 2300 mm was overlaid the circle plot, and the curvature substantially matches that of the circle plot. The variable radius curve of the present disclosure was also plotted, and from FIG. 4C, it can be seen that the radius is initially smaller (i.e., has a tighter curvature) than that of the constant radius curve. The radius of curvature increases according to a cubic function as the curve opens toward the edges, intersecting with the constant radius curve at the y-axis and bounds of the 650 mm span. Despite the continuously changing radius of curvature between the midpoint and each edge of the glass sheet across the span of the glass sheet, the deviation between the variable radius curve according to the present disclosure and the conventional constant radius curve was 2 mm or less. Thus, advantageously, the improved properties of the constant radius curvature are provided without producing a curved glass article that is perceptibly different (to the human eye) from the constant radius curve.

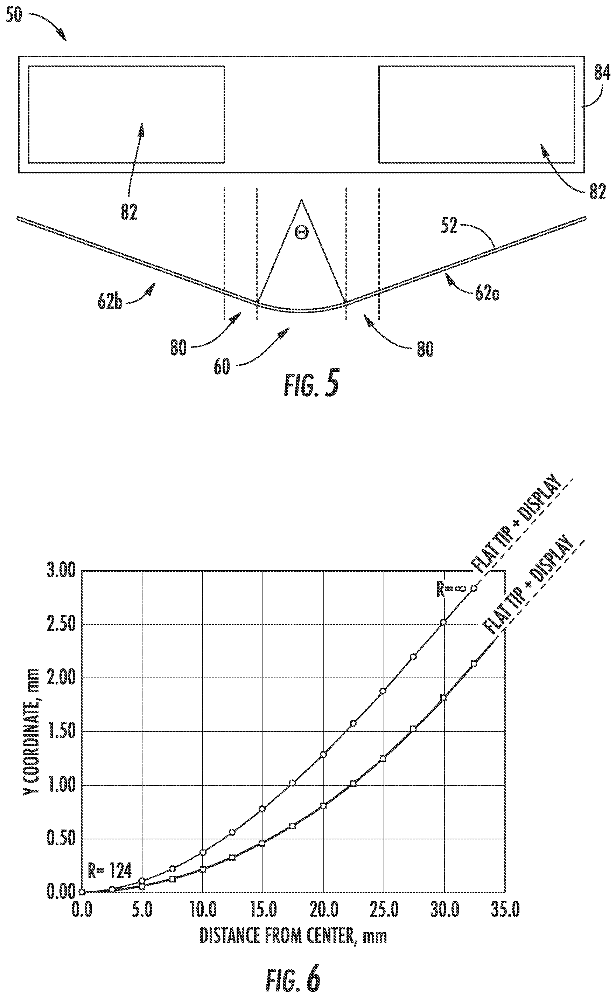

FIG. 5 provides schematic depictions of top and side views of a V-shaped glass article 50. Referring first to FIG. 5, the V-shaped glass article includes a curved region 60 flanked by two flat tip regions 80 where the curve transitions to the flat sections 62a, 62b. As mentioned above, the flat tip regions 80 are a transition region between the curved region 60 having the variable radius curvature (denoted by Θ symbol) and the flat sections 62a, 62b. In embodiments where the radius of curvature is continuous and described by a polynomial function of at least the third degree, the flat tip regions 80 may not be defined by the polynomial function. As shown in FIG. 5, a display is configured to be mounted in the flat sections 62a, 62b to define the display regions 82. From the top view, a bezel 84 is defined in the region outside of the display regions 82. In embodiments, the bezel 84 may be defined, at least in part, by the adhesive layer 66 and frame 64 and/or an opaque layer designed to hide connections to the display in the design regions 82. Further, the location of the displays, and hence of the display regions 82, may be dictated by customer specifications.

As can be seen when comparing the top and side views of FIG. 5, the edges of the bezels 84 and the flat tip regions 80 coincide with the edge of the display region 82. For a central curve spanning 65 mm, a constant radius of 250 mm has the same viewing angle as a variable (cubic) profile in which the radius increase from 124 mm to infinity (i.e., flat). Advantageously, as shown in the graph of the curve profiles (half profiles) in FIG. 6, the difference in profiles is 1 mm or less over the entire span, which may not be perceptible to the human eye. However, despite what is a small perceived difference in curvature, the stress on the adhesive layer 66 is reduced, and the flatness in the flat tip regions 80 that lead into the display regions 82 is improved, which provides advantages in terms of light leakage from the display. In particular and as will be discussed more fully below, irregular bending of the glass sheet 52 transmits the bending and shear stress to the display glass, resulting in unintended polarization of light leaking through the display.

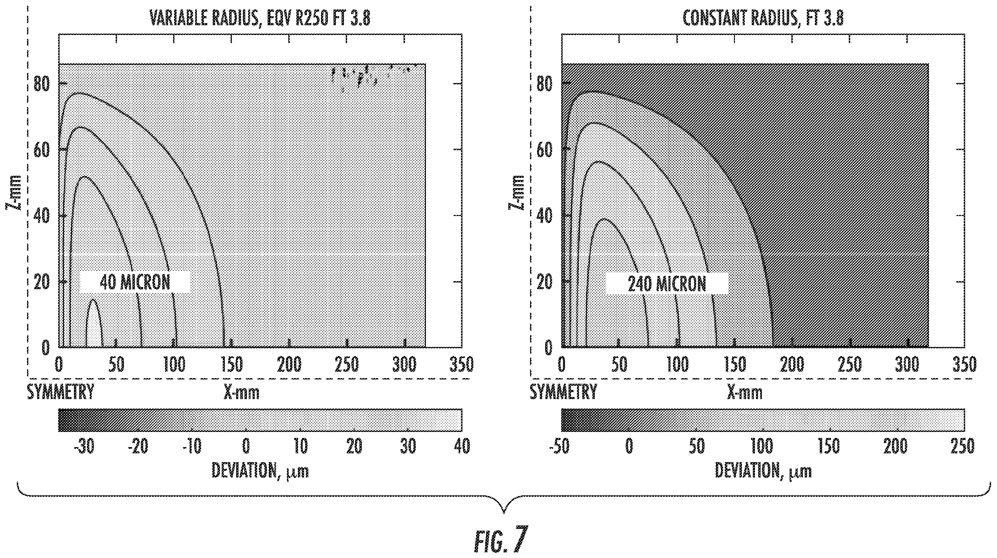

In the V-shaped glass article of FIG. 5, the flat tip regions 80 of the cubic curvature span a smaller distance than a constant radius curvature for an equivalent curvature as shown in FIG. 7. In particular, FIG. 7 depicts the shape deviation from planar for the half profiles of the cubic curvature and of the constant radius curvature shown in FIG. 6. As can be seen in FIG. 7, the cubic profile has a maximum shape deviation from planar of about 40 μm when the glass article is designed for a flat tip region of 3.8 mm. Further, the region over which the shape deviation is present is less than 150 mm. By contrast, the maximum shape deviation is about 240 μm for the constant radius curvature designed with a flat tip region of 3.8 mm. Additionally, the region over which the shape deviation is present is greater than 175 mm. In order to reduce the shape deviation of the constant radius curvature to the same level as the cubic curvature, the flat tip region would have to be designed to be at least 10 mm in the constant radius curvature. The shape deviation has a direct impact on light leakage, and thus, for the same size flat tip region, the cubic profile would have less light leakage than the constant radius curvature. On the other hand, if the constant radius curvature were designed to have the same level of shape deviation and light leakage as the cubic curvature, then the size of the flat tip region for the constant radius curve would reduce the available display area in comparison to the cubic curvature.

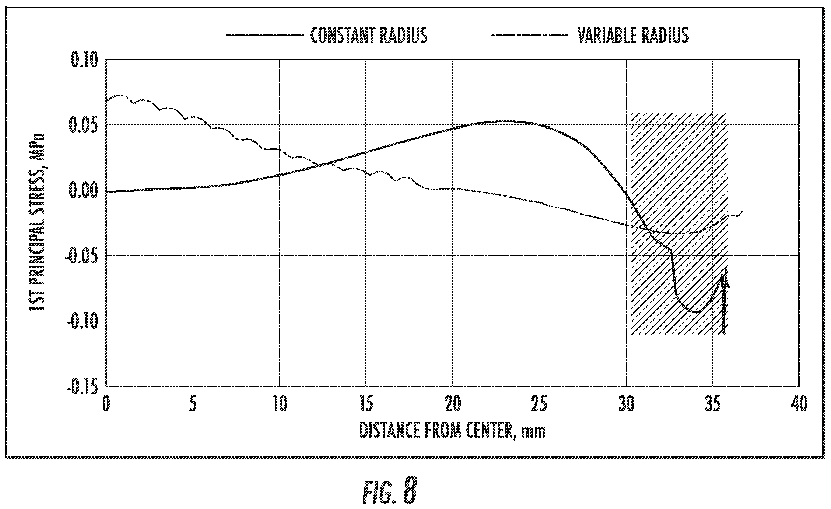

Further, the cold forming stress state and location of tensile and compressive stresses for the adhesive layer 66 are significantly different between a cubic curvature and a constant radius curvature. As shown in FIG. 8, starting from the vertex of the curvature and moving toward the edge, the cubic curvature exhibits an initial tensile stress (positive stress) in the adhesive layer that declines substantially linearly and transitions to a compressive stress (negative stress) adjacent to the display region 82. The constant radius curvature has zero stress until a distance of about 5 mm from the vertex, where a tensile stress develops in the adhesive layer and increases until about 25 mm. The stress for the constant radius curvature turns sharply after 25 mm, transitioning to a compressive stress in the adhesive layer at about 30 mm and exhibiting a significantly greater compressive stress than the cubic curvature in the region adjacent the display region. Further, as shown in FIG. 8, the compressive stress region for the cubic curvature is wider (beginning at 25 mm) and shallower (lower magnitude) than the compressive region of the constant radius curvature.

Advantageously, the stress profile in the adhesive layer 66 of the cubic curvature glass article 50 is more repeatable and predictable across various design configurations, such as different radii of curvature and part dimensions. In this way, the adhesive dispensing, selection, and coverage can be tailored to improve overall reliability.

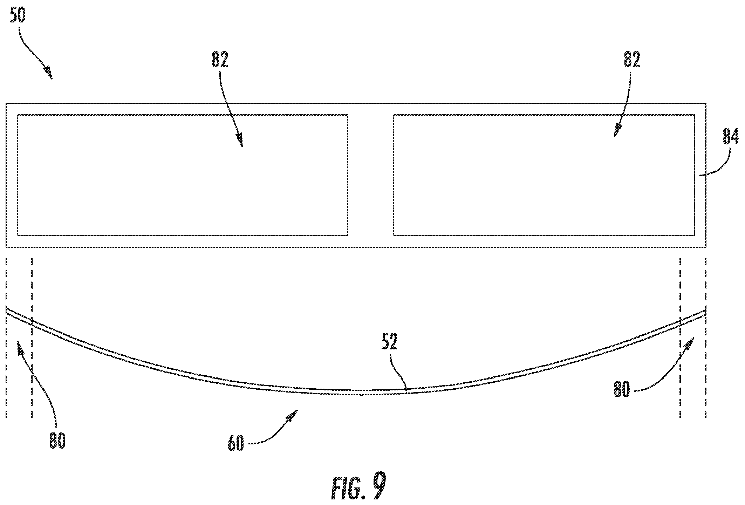

A similar stress profile would be exhibited for C-shaped glass articles. FIG. 9 depicts a top and side view such a C-shaped glass article 50. As can be seen in FIG. 9, the curved region 60 spans substantially the entire length of the glass article 50 with the flat tip regions 80 being located proximate to the edges of the glass sheet 52. As can be seen in FIG. 9, the flat tip regions 80 extend into the display regions 82 and define the flat sections 62a, 62b shown in FIG. 2B, discussed above. Advantageously, the variable (cubic) curvature provides the same advantages to the C-shaped glass article discussed above with respect to the V-shaped glass article, including improving adhesive reliability and decreasing light leakage by reducing stresses in the adhesive layer 66.

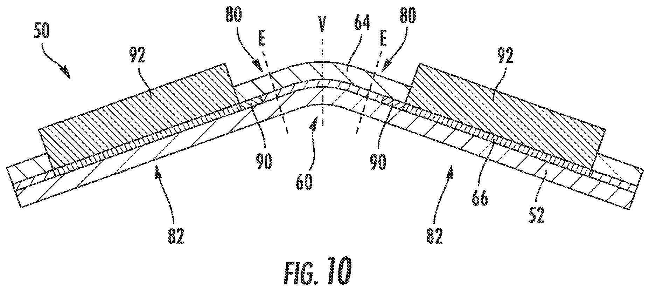

The light leakage was modeled for the cubic curvature (effective curvature of 250 mm) and for a constant radius curvature (250 mm radius of curvature) for a V-shaped glass article as shown in FIG. 10. In the model, various parameters were considered in terms of the effect of light leakage (or inversely, blackness uniformity). One factor considered in the modeling was the effect on light leakage for the two curvatures in relation to degree of cure for the adhesive layer 66. In particular, the light leakage for a 1%, 10%, and 100% cured adhesive layer 66 was modeled in order to understand the effect of removing the glass article from the process chuck prior to complete curing (which is desirable to increase throughput on a limited number of process chucks, especially where full cure can take up to 24 hours). At a lower cure percentage, the adhesive layer 66 will have a lower modulus, allowing the glass sheet 52 to compress and stretch and resulting in higher shape deviation and increased light leakage. Additionally, the effect of a bumper 90 in the flat tip region 80 adjacent to display 92 was considered. The bumper 90 is a thin region (e.g., 1 mm to 3 mm) in the adhesive layer 66 having a higher modulus than the adhesive layer 66 (at least when it is removed from the chuck prior to a full cure). In embodiments, the bumper 90 is a strip of pre-cured adhesive or of a rubber/foam tape. The bumper 90 resists deformation from compression from the glass sheet 52.

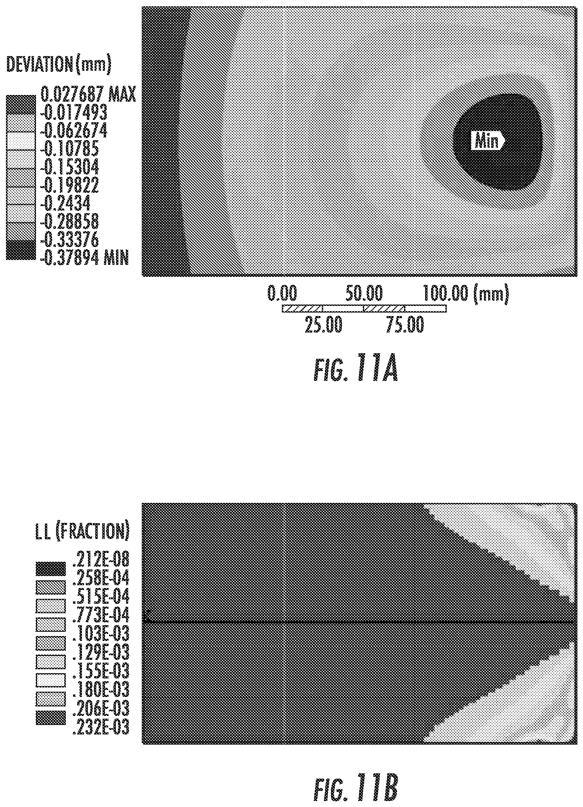

FIGS. 11A-11D illustrate example shape deviation and light leakage modeling results for the two curvatures. FIG. 11A depicts the overall shape of half of the glass sheet having a constant curvature. As can be seen in FIG. 11A, the minimum measured value (labeled "Min" in FIG. 11A), or maximum deviation below planar, was about 0.38 mm. The maximum measured value, or maximum deviation above planar, was about 0.03 mm. FIG. 11B depicts the fraction of light that leaks through the display based on predicted stresses in the glass article. Thus, this "light leakage" (referred to as "LL" in FIG. 11B) is localized lightening of the display in the dark state. The light leakage fraction shown in FIG. 11B refers to the fraction of the incident intensity from a backlight unit of a display that passes through the glass sheet in the dark state. In the example shown in FIG. 11B, the maximum light leakage fraction for the constant curvature glass sheet is $0.232 \times 10^{-3}$.

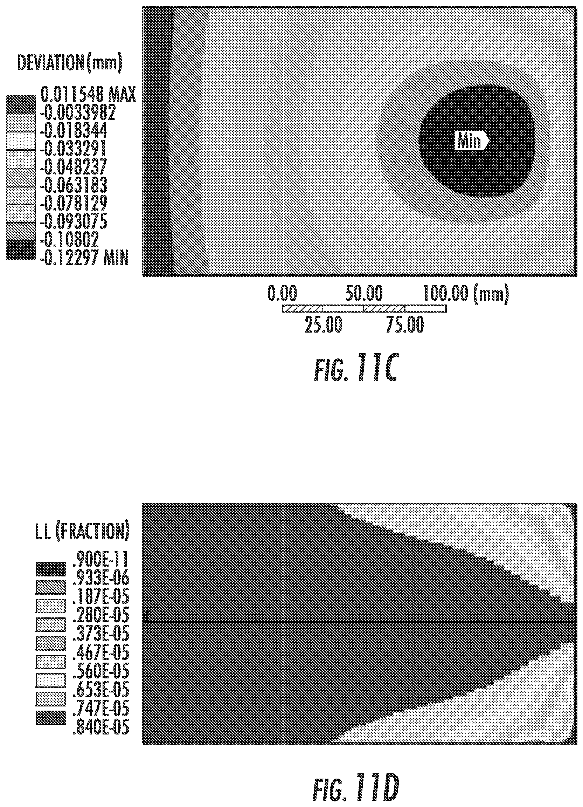

The FIG. 11C depicts the overall shape of the glass sheet 52 having a variable (cubic) curvature. As can be seen in FIG. 11C, the minimum measured value (labeled "Min" in FIG. 11C), or maximum deviation below planar, was about 0.12 mm, which is less than a third of what the minimum measured in FIG. 11A. The maximum measured value, or maximum deviation above planar, was about 0.01 mm, which was also about a third of the maximum measured in FIG. 11A. FIG. 11D depicts the light leakage (LL) fraction for the variable radius (cubic) curvature. The maximum light leakage fraction was $0.840 \times 10^{-5}$, which is two orders of magnitude lower than the constant radius curvature shown in FIG. 11B.

The final shape of the glass sheet and its impact on light leakage is dependent on the modulus of the adhesive when the clamping and chuck support is removed, not the final adhesive modulus values. Table 1 summarizes results from all of the cases modeled. In the models, the adhesive layer considered was Betaseal™ X2500 (available from DuPont, Wilmington, DE), which had a fully cured shear modulus of 3.207 MPa. Further, the modeled data was generated based on a bend length of 65.45 mm for the constant radius curvature and 58 mm for the variable (cubic) curvature.

In Table 1, the black uniformity (BU) is the ratio of the minimum to maximum light intensity and is the industry standard for evaluation of light leakage performance. For the models of light leakage (LL) fraction as shown in FIGS. 11B and 11D, the black uniformity is $1/(1+LL_{max} \times CR)$, where CR is the display contrast ratio. For the modeled data, a contrast ratio of 1000 was used. Typically, a black uniformity of 50% or higher is desired for a finished part. However, in order to account for manufacturing and component variability, which also contribute to reducing the BU, a design with higher BU is more robust and desirable.

As can be seen in Table 1, the first two cases considered a constant radius curvature in which the adhesive was cured to 1%. The first case had a larger flat tip length than the second case (6.4 mm and 0.5 mm, respectively), and the longer flat tip length provide less light leakage and greater black uniformity. The third case was a variable (cubic) curvature having a 1% cured adhesive layer and a 0.5 mm flat tip length. As compared to the second case, the light leakage and black uniformity were similar. The fourth and fifth cases considered a constant radius curvature cured to 10% and having a 0.5 mm flat tip length. As can be seen in Table 1, the variable (cubic) curvature has a significantly higher black uniformity (92% to 67%) and a significantly lower light leakage (by an order of magnitude). The sixth through ninth cases each considered the effect of a bumper 90 on the light leakage and black uniformity. For the sixth and seventh cases, the flat tip region was 2 mm and the adhesive was cured at 1%. For the variable (cubic) curvature, the black uniformity was higher than that of the constant curvature (87% to 70%), and the light leakage of the variable (cubic) curvature was about a third of that of the constant curvature. For the eighth and ninth cases, the flat tip length was 0.5 mm, and the adhesive layer was cured to 100%. As can be seen in Table 1, the black uniformity and light leakage are significantly improved in the variable (cubic) curvature to 99% and $8.4 \times 10^{-6}$, respectively. For the constant radius curvature, the black uniformity is only increased to 81%.

Table 1. Design Parameters and Light Leakage and Black Uniformity Performance for Constant and Variable Radius Curvatures

| Case | Bend Type | Flat Length [mm] | Bumper included in model | Frame Adhesive Shear Modulus G [MPa] | Predicted deviation - with display [mm] | Maximum LL fraction | Black uniformity (BU) % |
|---|---|---|---|---|---|---|---|
| 1 | Constant | 6.4 | No | 0.026 | 0.491 | 0.000437 | 70 |
| 2 | Constant | 0.5 | No | 0.026 | 0.545 | 0.000903 | 53 |
| 3 | Variable | 0.5 | No | 0.026 | 0.699 | 0.000835 | 54 |
| 4 | Constant | 0.5 | No | 0.317 | 0.336 | 0.000497 | 67 |
| 5 | Variable | 0.5 | No | 0.317 | 0.209 | 8.31E-05 | 92 |
| 6 | Constant | 2 | Yes | 0.026 | 0.236 | 0.000433 | 70 |
| 7 | Variable | 2 | Yes | 0.026 | 0.161 | 0.000155 | 87 |
| 8 | Constant | 0.5 | Yes | 3.207 | 0.217 | 0.000232 | 81 |
| 9 | Variable | 0.5 | Yes | 3.207 | 0.066 | 8.4E-06 | 99 |

Table 2 provides a summary of the black uniformity performance for the constant and variable radius curvatures. As can be seen in Table 2, the black uniformity is greater for each level of adhesive layer cure and with the use of a bumper in the adhesive layer.

| Description | Adhesive shear modulus relative to full cure (%) | Flat tip length (mm) | BU for constant radius design (%) | BU for variable radius design (%) |
|---|---|---|---|---|
| Low adhesive cure | 1 | 0.5 | 53 | 54 |
| Moderate adhesive cure | 10 | 0.5 | 67 | 92 |
| Full adhesive cure | 100 | 0.5 | 81 | 99 |
| With bumper | 1 | 2.0 | 70 | 87 |

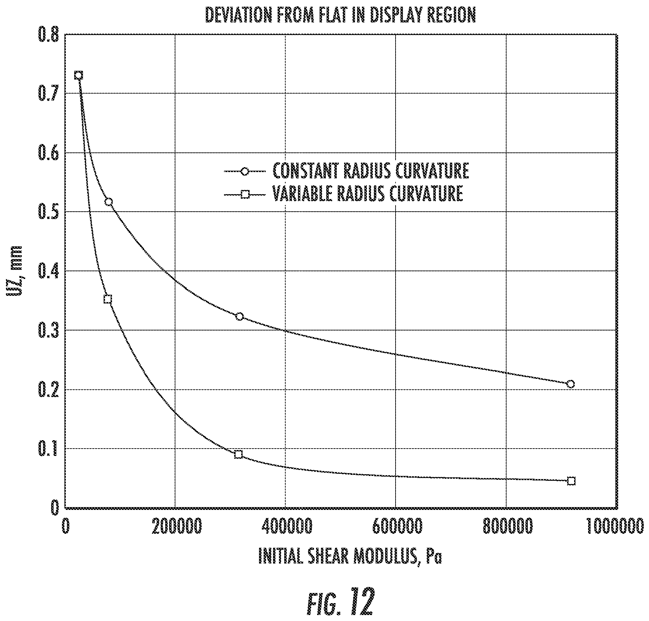

FIG. 12 illustrates the improvement in glass sheet shape deviation (UZ, y-axis) based on the design and the adhesive modulus (x-axis), which can represent a percentage of cure when removed from a forming apparatus (e.g., vacuum chuck). As can be seen in FIG. 12, the shape deviation for the variable (cubic) radius curvature decreases more rapidly as the adhesive modulus increases than the constant radius curvature. Thus, for example, a glass article having a variable radius curvature can be removed from the forming apparatus at a lower degree of cure than a glass article having a constant radius of curvature, thereby increasing throughput for glass articles having a variable radius of curvature. Additionally, because the variable radius curvature can be described as a three-point bend, clamping of the glass sheet during adhesive cure can be less substantial than for a constant radius curvature. For example, the glass article having the variable radius can be clamped at the vertex of the curved region.

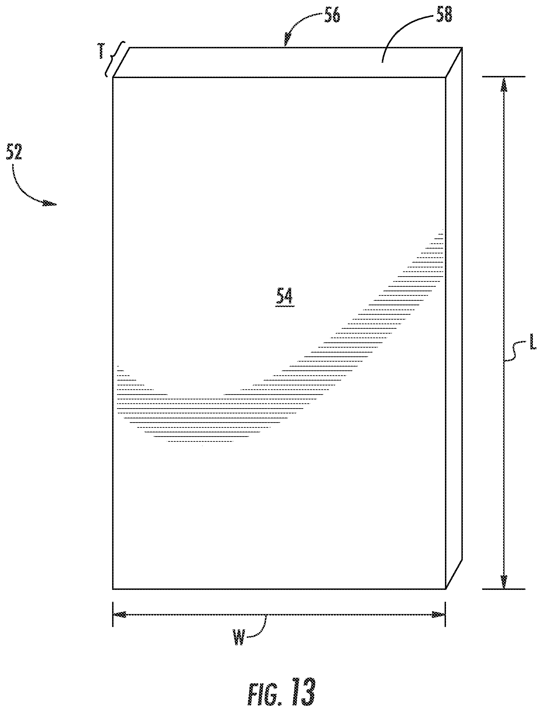

Referring to FIG. 13, additional structural details of glass sheet 52 are shown and described. As noted above, glass sheet 52 has a thickness T that is substantially constant and is defined as a distance between the first major surface 54 and the second major surface 56. In various embodiments, T may refer to an average thickness or a maximum thickness of the glass sheet. In addition, glass sheet 52 includes a width W defined as a first maximum dimension of one of the first or second major surfaces 54, 56 orthogonal to the thickness T, and a length L defined as a second maximum dimension of one of the first or second major surfaces 54, 56 orthogonal to both the thickness and the width. In other embodiments, W and L may be the average width and the average length of glass sheet 52, respectively.

**In** various embodiments, average or maximum thickness T is in the range of 0.3 mm to 2 mm. In various embodiments, width W is in a range from 5 cm to 250 cm, and length L is in a range from about 5 cm to about 1500 cm. As mentioned above, the radius of curvature at the midpoint (e.g., $R_1$ as shown in FIGS. 2A and 2B) of glass sheet 52 is about 30 mm to about 1000 mm.

In embodiments, the glass sheet 52 may be strengthened. In one or more embodiments, glass sheet 52 may be strengthened to include compressive stress that extends from a surface to a depth of compression (DOC). The compressive stress regions are balanced by a central portion exhibiting a tensile stress. At the DOC, the stress crosses from a positive (compressive) stress to a negative (tensile) stress.

In various embodiments, glass sheet 52 may be strengthened mechanically by utilizing a mismatch of the coefficient of thermal expansion between portions of the article to create a compressive stress region and a central region exhibiting a tensile stress. In some embodiments, the glass sheet may be strengthened thermally by heating the glass to a temperature above the glass transition point and then rapidly quenching.

In various embodiments, glass sheet 52 may be chemically strengthened by ion exchange. In the ion exchange process, ions at or near the surface of the glass sheet are replaced by - or exchanged with - larger ions having the same valence or oxidation state. In those embodiments in which the glass sheet comprises an alkali aluminosilicate glass, ions in the surface layer of the article and the larger ions are monovalent alkali metal cations, such as $Li^+$, $Na^+$, $K^+$, $Rb^+$, and $Cs^+$. Alternatively, monovalent cations in the surface layer may be replaced with monovalent cations other than alkali metal cations, such as $Ag^+$ or the like. In such embodiments, the monovalent ions (or cations) exchanged into the glass sheet generate a stress.

Ion exchange processes are typically carried out by immersing a glass sheet in a molten salt bath (or two or more molten salt baths) containing the larger ions to be exchanged with the smaller ions in the glass sheet. It should be noted that aqueous salt baths may also be utilized. In addition, the composition of the bath(s) may include more than one type of larger ions (e.g., Na+ and K+) or a single larger ion. It will be appreciated by those skilled in the art that parameters for the ion exchange process, including, but not limited to, bath composition and temperature, immersion time, the number of immersions of the glass sheet in a salt bath (or baths), use of multiple salt baths, additional steps such as annealing, washing, and the like, are generally determined by the composition of the glass sheet (including the structure of the article and any crystalline phases present) and the desired DOC and CS of the glass sheet that results from strengthening. Exemplary molten bath compositions may include nitrates, sulfates, and chlorides of the larger alkali metal ion. Typical nitrates include $KNO_3$, $NaNO_3$, $LiNO_3$, $NaSO_4$ and combinations thereof. The temperature of the molten salt bath typically is in a range from about 380°C up to about 450°C, while immersion times range from about 15 minutes up to about 100 hours depending on glass sheet thickness, bath temperature and glass (or monovalent ion) diffusivity. However, temperatures and immersion times different from those described above may also be used.

In one or more embodiments, the glass sheet 52 may be immersed in a molten salt bath of 100% $NaNO_3$, 100% $KNO_3$, or a combination of $NaNO_3$ and $KNO_3$ having a temperature from about 370 °C to about 480 °C. In some embodiments, the glass sheet may be immersed in a molten mixed salt bath including from about 5% to about 90% $KNO_3$ and from about 10% to about 95% $NaNO_3$. In one or more embodiments, the glass sheet may be immersed in a second bath, after immersion in a first bath. The first and second baths may have different compositions and/or temperatures from one another. The immersion times in the first and second baths may vary. For example, immersion in the first bath may be longer than the immersion in the second bath.

**In** one or more embodiments, the glass sheet may be immersed in a molten, mixed salt bath including $NaNO_3$ and $KNO_3$ (e.g., 49%/51%, 50%/50%, 51%/49%) having a temperature less than about 420 °C (e.g., about 400 °C or about 380 °C). for less than about 5 hours, or even about 4 hours or less.

Ion exchange conditions can be tailored to provide a "spike" or to increase the slope of the stress profile at or near the surface of the resulting glass sheet. The spike may result in a greater surface CS value. This spike can be achieved by a single bath or multiple baths, with the bath(s) having a single composition or mixed composition, due to the unique properties of the glass compositions used in the glass sheets described herein.

In one or more embodiments, where more than one monovalent ion is exchanged into the glass sheet, the different monovalent ions may exchange to different depths within the glass sheet (and generate different magnitudes stresses within the glass sheet at different depths). The resulting relative depths of the stress-generating ions can be determined and cause different characteristics of the stress profile.

CS is measured using those means known in the art, such as by surface stress meter (FSM) using commercially available instruments such as the FSM-6000, manufactured by Orihara Industrial Co., Ltd. (Japan). Surface stress measurements rely upon the accurate measurement of the stress optical coefficient (SOC), which is related to the birefringence of the glass. SOC in turn is measured by those methods that are known in the art, such as fiber and four point bend methods, both of which are described in ASTM standard C770-98 (2013), entitled "Standard Test Method for Measurement of Glass Stress-Optical Coefficient," and a bulk cylinder method. As used herein CS may be the "maximum compressive stress" which is the highest compressive stress value measured within the compressive stress layer. In some embodiments, the maximum compressive stress is located at the surface of the glass sheet. In other embodiments, the maximum compressive stress may occur at a depth below the surface, giving the compressive profile the appearance of a "buried peak."

DOC may be measured by FSM or by a scattered light polariscope (SCALP) (such as the SCALP-04 scattered light polariscope available from Glasstress Ltd., located in Tallinn Estonia), depending on the strengthening method and conditions. When the glass sheet is chemically strengthened by an ion exchange treatment, FSM or SCALP may be used depending on which ion is exchanged into the glass sheet. Where the stress in the glass sheet is generated by exchanging potassium ions into the glass sheet, FSM is used to measure DOC. Where the stress is generated by exchanging sodium ions into the glass sheet, SCALP is used to measure DOC. Where the stress in the glass sheet is generated by exchanging both potassium and sodium ions into the glass, the DOC is measured by SCALP, since it is believed the exchange depth of sodium indicates the DOC and the exchange depth of potassium ions indicates a change in the magnitude of the compressive stress (but not the change in stress from compressive to tensile); the exchange depth of potassium ions in such glass sheets is measured by FSM. Central tension or CT is the maximum tensile stress and is measured by SCALP.

In one or more embodiments, the glass sheet may be strengthened to exhibit a DOC that is described as a fraction of the thickness T of the glass sheet (as described herein). For example, in one or more embodiments, the DOC may be in the range of about 0.05T to about 0.25T. In some instances, the DOC may be in the range of about 20 $\mu$m to about 300 $\mu$m. In one or more embodiments, the strengthened glass sheet 52 may have a CS (which may be found at the surface or a depth within the glass sheet) of about 200 MPa or greater, about 500 MPa or greater, or about 1050 MPa or greater. In one or more embodiments, the strengthened glass sheet may have a maximum tensile stress or central tension (CT) in the range of about 20 MPa to about 100 MPa.

Suitable glass compositions for use as glass sheet 52 include soda lime glass, aluminosilicate glass, borosilicate glass, boroaluminosilicate glass, alkali-containing aluminosilicate glass, alkali-containing borosilicate glass, and alkali-containing boroaluminosilicate glass.

Unless otherwise specified, the glass compositions disclosed herein are described in mole percent (mol%) as analyzed on an oxide basis.

In one or more embodiments, the glass composition may include $SiO_2$ in an amount in a range from about 66 mol% to about 80 mol%. In one or more embodiments, the glass composition includes $Al_2O_3$ in an amount of about 3 mol% to about 15 mol%. In one or more embodiments, the glass article is described as an aluminosilicate glass article or including an aluminosilicate glass composition. In such embodiments, the glass composition or article formed therefrom includes $SiO_2$ and $Al_2O_3$ and is not a soda lime silicate glass.

In one or more embodiments, the glass composition comprises $B_2O_3$ in an amount in the range of about 0.01 mol% to about 5 mol%. However, in one or more embodiments, the glass composition is substantially free of $B_2O_3$. As used herein, the phrase "substantially free" with respect to the components of the composition means that the component is not actively or intentionally added to the composition during initial batching, but may be present as an impurity in an amount less than about 0.001 mol%.

In one or more embodiments, the glass composition optionally comprises $P_2O_5$ in an amount of about 0.01 mol% to 2 mol%. In one or more embodiments, the glass composition is substantially free of $P_2O_5$.

In one or more embodiments, the glass composition may include a total amount of $R_2O$ (which is the total amount of alkali metal oxide such as $Li_2O$, $Na_2O$, $K_2O$, $Rb_2O$, and $Cs_2O$) that is in a range from about 8 mol% to about 20 mol%. In one or more embodiments, the glass composition may be substantially free of $Rb_2O$, $Cs_2O$ or both $Rb_2O$ and $Cs_2O$. In one or more embodiments, the $R_2O$ may include the total amount of $Li_2O$, $Na_2O$ and $K_2O$ only. In one or more embodiments, the glass composition may comprise at least one alkali metal oxide selected from $Li_2O$, $Na_2O$ and $K_2O$, wherein the alkali metal oxide is present in an amount greater than about 8 mol% or greater.

In one or more embodiments, the glass composition comprises $Na_2O$ in an amount in a range from about from about 8 mol% to about 20 mol%. In one or more embodiments, the glass composition includes $K_2O$ in an amount in a range from about 0 mol% to about 4 mol%. In one or more embodiments, the glass composition may be substantially free of $K_2O$. In one or more embodiments, the glass composition is substantially free of $Li_2O$. In one or more embodiments, the amount of $Na_2O$ in the composition may be greater than the amount of $Li_2O$. In some instances, the amount of $Na_2O$ may be greater than the combined amount of $Li_2O$ and $K_2O$. In one or more alternative embodiments, the amount of $Li_2O$ in the composition may be greater than the amount of $Na_2O$ or the combined amount of $Na_2O$ and $K_2O$.

In one or more embodiments, the glass composition may include a total amount of RO (which is the total amount of alkaline earth metal oxide such as CaO, MgO, BaO, ZnO and SrO) in a range from about 0 mol% to about 2 mol%. In one or more embodiments, the glass composition includes CaO in an amount less than about 1 mol%. In one or more embodiments, the glass composition is substantially free of CaO. In some embodiments, the glass composition comprises MgO in an amount from about 0 mol% to about 7 mol%.

In one or more embodiments, the glass composition comprises $ZrO_2$ in an amount equal to or less than about 0.2 mol%. In one or more embodiments, the glass composition comprises $SnO_2$ in an amount equal to or less than about 0.2 mol%.

In one or more embodiments, the glass composition may include an oxide that imparts a color or tint to the glass articles. In some embodiments, the glass composition includes an oxide that prevents discoloration of the glass article when the glass article is exposed to ultraviolet radiation. Examples of such oxides include, without limitation oxides of: Ti, V, Cr, Mn, Fe, Co, Ni, Cu, Ce, W, and Mo.

In one or more embodiments, the glass composition includes Fe expressed as $Fe_2O_3$, wherein Fe is present in an amount up to 1 mol%. Where the glass composition includes $TiO_2$, $TiO_2$ may be present in an amount of about 5 mol% or less.

An exemplary glass composition includes $SiO_2$ in an amount in a range from about 65 mol% to about 75 mol%, $Al_2O_3$ in an amount in a range from about 8 mol% to about 14 mol%, $Na_2O$ in an amount in a range from about 12 mol% to about 17 mol%, $K_2O$ in an amount in a range of about 0 mol% to about 0.2 mol%, and MgO in an amount in a range from about 1.5 mol% to about 6 mol%. Optionally, $SnO_2$ may be included in the amounts otherwise disclosed herein. It should be understood, that while the preceding glass composition paragraphs express approximate ranges, in other embodiments, glass sheet 52 may be made from any glass composition falling with any one of the exact numerical ranges discussed above.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that any particular order be inferred. In addition, as used herein, the article "a" is intended to include one or more than one component or element, and is not intended to be construed as meaning only one.

**Claims**

1. A glass article comprising:

   a frame;
   a glass sheet comprising a first major surface and a second major surface, wherein the second major surface is opposite to the first major surface;
   an adhesive layer disposed between the frame and the second major surface of the glass sheet, wherein the adhesive layer holds the glass sheet in a curved shape and prevents the glass from springing back to a non-curved configuration;
   wherein the first major surface defines a variable curvature comprising a vertex, a first edge spatially disposed in a first direction from the vertex, a second edge spatially disposed from the vertex in a second direction opposite to the first direction, a first flat tip region, and a second flat tip region, wherein the first edge is positioned between the vertex and the first flat tip region and the second edge is positioned between the vertex and the second flat tip region;
   wherein the variable curvature has a first radius of curvature at the vertex, a second radius of curvature at the first edge, and a third radius of curvature at the second edge;
   wherein both of the second radius of curvature and the third radius of curvature are greater than the first radius of curvature;
   wherein, in the first flat tip region, the first major surface transitions to a fourth radius of curvature greater than 10 m,
   wherein, in the second flat tip region, the first major surface transitions to a fifth radius of curvature greater than 10 m,
   wherein the first major surface deviates no more than 100 $\mu$m from planar in the first and second flat tip regions.

2. The glass article of claim 1, wherein the first radius of curvature is constant in a first section spanning a first distance across the vertex, wherein the second radius of curvature is constant in a first side region spanning a second distance to the first edge, and the third radius of curvature is constant in a second side region spanning a third distance to the second edge.

3. The glass article of claim 1, further comprising a first gradient region disposed between the first edge and the vertex and a second gradient region disposed between the second edge and the vertex, wherein the first radius of curvature increases continuously or in a first plurality of steps to the second radius of curvature in the first gradient region, and wherein the first radius of curvature increases continuously or in a second plurality of steps to the third radius of curvature in the second gradient region.

4. The glass article of any of the preceding claims, wherein the glass sheet is V-shaped and comprises a first flat section and a second flat section, wherein the first flat tip region transitions the first edge to the first flat section and the second flat tip region transitions the second edge to the second flat section, wherein the first flat tip region and the second flat tip region are 10 mm or less in width.

5. The glass article of any of the preceding claims, further comprising at least one display adhered to the second major surface of the glass sheet.

6. The glass article of claim 5, wherein, as viewed from the first major surface, the at least one display comprises a black uniformity of at least 50%.

7. The glass article of claim 5 or claim 6, further comprising a bumper element disposed adjacent to the at least one display;

   wherein the adhesive layer comprises a first modulus of elasticity and the bumper element comprises a second modulus of elasticity; and
   wherein the second modulus of elasticity is greater than the first modulus of elasticity.

8. A method of forming a glass article, comprising:

   positioning a glass sheet over a process chuck, wherein the glass sheet comprises a first major surface and a second major surface opposite to the first major surface, wherein the process chuck comprises a forming surface defining a variable curvature, wherein the glass sheet is positioned such that the first major surface is facing the forming surface;
   bending the glass sheet over the process chuck so that the glass sheet conforms to the variable curvature of the process chuck;
   attaching a frame to the glass sheet via an adhesive layer to maintain the variable curvature in the glass sheet;
   wherein the variable curvature in the glass sheet comprises a minimum radius of curvature at a vertex of the variable curvature and regions on each side of the vertex having a radius of curvature greater than the minimum radius of curvature,
   wherein the variable curvature of the glass sheet comprises a first flat tip region extending from one of the regions, and a second flat tip region extending from another one of the regions,
   wherein, in the first flat tip region, the first major surface transitions to a first radius of curvature greater than 10 m,
   wherein, in the second flat tip region, the first major surface transitions to a second radius of curvature greater than 10 m,
   wherein the first major surface deviates no more than 100 $\mu$m from planar in the first flat tip region and the second flat tip region.

9. The method of claim 8, further comprising attaching at least one display to the second major surface of the glass sheet.

10. The method of claim 9, further comprising positioning a bumper element in the adhesive layer and adjacent to the at least one display, wherein the bumper element comprises a first modulus, wherein the adhesive layer comprises a second modulus, and wherein the first modulus is greater than the second modulus.

11. The method of any one of claims 8-10, wherein the radius of curvature in the regions on each side of the vertex increases continuously as distance from the vertex increases.

**Patentansprüche**

1. Glasartikel, aufweisend:

   einen Rahmen;
   eine Glasscheibe mit einer ersten Hauptfläche und einer zweiten Hauptfläche, wobei die zweite Hauptfläche entgegengesetzt zur ersten Hauptfläche ist;
   eine Klebeschicht, die zwischen dem Rahmen und der zweiten Hauptfläche der Glasscheibe angeordnet ist, wobei die Klebeschicht die Glasscheibe in einer gekrümmten Form hält und verhindert, dass das Glas in eine nicht gekrümmte Konfiguration zurückfedert;

wobei die erste Hauptfläche eine variable Krümmung definiert, die einen Scheitelpunkt aufweist, einen ersten Rand, der räumlich vom Scheitelpunkt in einer ersten Richtung entfernt angeordnet ist, einen zweiten Rand, der räumlich vom Scheitelpunkt in einer zweiten Richtung entfernt angeordnet ist, die entgegengesetzt zur ersten Richtung ist, einen ersten flachen Ausläuferbereich und einen zweiten flachen Ausläuferbereich, wobei der erste Rand zwischen dem Scheitelpunkt und dem ersten flachen Ausläuferbereich und der zweite Rand zwischen dem Scheitelpunkt und dem zweiten flachen Ausläuferbereich positioniert ist;

wobei die variable Krümmung am Scheitelpunkt einen ersten Krümmungsradius, am ersten Rand einen zweiten Krümmungsradius und am zweiten Rand einen dritten Krümmungsradius hat;

wobei sowohl der zweite Krümmungsradius als auch der dritte Krümmungsradius größer als der erste Krümmungsradius ist;

wobei in dem ersten flachen Ausläuferbereich die erste Hauptfläche in einen vierten Krümmungsradius übergeht, der größer als 10 m ist,

wobei in dem zweiten flachen Ausläuferbereich die erste Hauptfläche in einen fünften Krümmungsradius übergeht, der größer als 10 m ist,

wobei die erste Hauptfläche im ersten und zweiten flachen Ausläuferbereich um nicht mehr als 100 $\mu$m von der Ebenheit abweicht.

2. Glasartikel nach Anspruch 1, wobei der erste Krümmungsradius in einem ersten Abschnitt konstant ist, der eine erste Strecke über den Scheitelpunkt hinweg überspannt, der zweite Krümmungsradius in einem ersten Seitenbereich konstant ist, der eine zweite Strecke bis zum ersten Rand überspannt, und der dritte Krümmungsradius in einem zweiten Seitenbereich konstant ist, der eine dritte Strecke bis zum zweiten Rand überspannt.

3. Glasartikel nach Anspruch 1, darüber hinaus einen ersten Gradientenbereich aufweisend, der zwischen dem ersten Rand und dem Scheitelpunkt angeordnet ist, und einen zweiten Gradientenbereich aufweisend, der zwischen dem zweiten Rand und dem Scheitelpunkt angeordnet ist, wobei der erste Krümmungsradius kontinuierlich oder in einer ersten Vielzahl von Schritten auf den zweiten Krümmungsradius im ersten Gradientenbereich ansteigt, und wobei der erste Krümmungsradius kontinuierlich oder in einer zweiten Vielzahl von Schritten auf den dritten Krümmungsradius im zweiten Gradientenbereich ansteigt.

4. Glasartikel nach einem der vorhergehenden Ansprüche, wobei die Glasscheibe V-förmig ist und einen ersten flachen Abschnitt und einen zweiten flachen Abschnitt aufweist, wobei der erste flache Ausläuferbereich einen Übergang vom ersten Rand zum ersten flachen Abschnitt bildet und der zweite flache Ausläuferbereich einen Übergang vom zweiten Rand zum zweiten flachen Abschnitt bildet, wobei der erste flache Ausläuferbereich und der zweite flache Ausläuferbereich eine Breite von 10 mm oder weniger haben.

5. Glasartikel nach einem der vorhergehenden Ansprüche, darüber hinaus mindestens eine Anzeige aufweisend, die an die zweite Hauptfläche der Glasscheibe angeklebt ist.

6. Glasartikel nach Anspruch 5, wobei, von der ersten Hauptfläche aus gesehen, die mindestens eine Anzeige eine schwarze Gleichmäßigkeit von mindestens 50 % aufweist.

7. Glasartikel nach Anspruch 5 oder Anspruch 6, darüber hinaus ein Pufferelement aufweisend, das benachbart zu der mindestens einen Anzeige angeordnet ist;

wobei die Klebeschicht einen ersten Elastizitätsmodul und das Pufferelement einen zweiten Elastizitätsmodul aufweist; und

wobei der zweite Elastizitätsmodul größer als der erste Elastizitätsmodul ist.

8. Verfahren zur Bildung eines Glasartikels, umfassend:

Positionieren einer Glasscheibe über einer Prozess-Spannvorrichtung, wobei die Glasscheibe eine erste Hauptfläche und eine zweite Hauptfläche entgegengesetzt zur ersten Hauptfläche aufweist, wobei die Prozess-Spannvorrichtung eine Formungsoberfläche aufweist, die eine variable Krümmung definiert, wobei die Glasscheibe so positioniert wird, dass die erste Hauptfläche der Formungsoberfläche zugewandt ist;

Biegen der Glasscheibe über der Prozess-Spannvorrichtung, so dass die Glasscheibe sich an die variable Krümmung der Prozess-Spannvorrichtung anpasst;

Anbringen eines Rahmens an der Glasscheibe über eine Klebeschicht, um die variable Krümmung in der Glasscheibe beizubehalten;

wobei die variable Krümmung in der Glasscheibe einen minimalen Krümmungsradius an einem Scheitelpunkt der variablen Krümmung und Bereiche an jeder Seite des Scheitelpunkts mit einem Krümmungsradius aufweist, der größer als der minimale Krümmungsradius ist,

wobei die variable Krümmung der Glasscheibe einen ersten flachen Ausläuferbereich aufweist, der sich von einem der Bereiche aus erstreckt, und einen zweiten flachen Ausläuferbereich, der sich von einem anderen der Bereiche aus erstreckt,

wobei in dem ersten flachen Ausläuferbereich die erste Hauptfläche in den ersten Krümmungsradius übergeht, größer als 10 m ist,

wobei in dem zweiten flachen Ausläuferbereich die erste Hauptfläche in einen zweiten Krümmungsradius übergeht, der größer als 10 m ist,

wobei die erste Hauptfläche im ersten flachen Ausläuferbereich und zweiten flachen Ausläuferbereich um nicht mehr als 100 μm von der Ebenheit abweicht.

9. Verfahren nach Anspruch 8, darüber hinaus umfassend, mindestens eine Anzeige an der zweiten Hauptfläche der Glasscheibe anzubringen.

10. Verfahren nach Anspruch 9, darüber hinaus umfassend, ein Pufferelement in der Klebeschicht benachbart zu der mindestens einen Anzeige zu positionieren, wobei das Pufferelement einen ersten Modul und die Klebeschicht einen zweiten Modul aufweist, und wobei der erste Modul größer als der zweite Modul ist.

11. Verfahren nach einem der Ansprüche 8 bis 10, wobei der Krümmungsradius in den Bereichen auf jeder Seite des Scheitelpunkts mit zunehmender Entfernung vom Scheitelpunkt kontinuierlich ansteigt.

**Revendications**

1. Article en verre, comprenant :

   un cadre ;
   une vitre ayant une première surface principale et une deuxième surface principale, la deuxième surface principale étant opposée à la première surface principale ;
   une couche adhésive disposée entre le cadre et la deuxième surface principale de la vitre, la couche adhésive maintenant la vitre dans une forme courbée et empêchant le verre de reprendre une configuration non courbée ;
   la première surface principale définissant une courbure variable comprenant un sommet, un premier bord espacé du sommet dans une première direction, un deuxième bord espacé du sommet dans une deuxième direction opposée à la première direction, une première zone terminale plate et une deuxième zone terminale plate, le premier bord étant positionné entre le sommet et la première zone terminale plate, et le deuxième bord étant positionné entre le sommet et la deuxième zone terminale plate ;
   la courbure variable ayant un premier rayon de courbure au sommet, un deuxième rayon de courbure au premier bord et un troisième rayon de courbure au deuxième bord ;
   le deuxième rayon de courbure et le troisième rayon de courbure étant tous deux supérieurs au premier rayon de courbure ;
   dans la première zone plate terminale, la première surface principale se transforme en un quatrième rayon de courbure supérieur à 10 m,
   dans la deuxième zone plate terminale, la première surface principale se transforme en un cinquième rayon de courbure supérieur à 10 m,
   la première surface principale, dans les première et deuxième zones plates terminales, ne s'écartant pas de plus de 100 μm de la planéité.

2. L'article en verre selon la revendication 1, sachant que le premier rayon de courbure est constant dans une première section s'étendant sur une première distance au-delà du sommet, le deuxième rayon de courbure est constant dans une première zone latérale s'étendant sur une deuxième distance jusqu'au premier bord, et le troisième rayon de courbure est constant dans une deuxième zone latérale s'étendant sur une troisième distance jusqu'au deuxième bord.

3. L'article en verre selon la revendication 1, comportant en outre une première zone de gradient située entre le premier bord et le sommet, et une deuxième zone de gradient située entre le deuxième bord et le sommet, le premier rayon de courbure augmentant de manière continue ou sous la forme d'une première pluralité d'étapes jusqu'au deuxième rayon de courbure dans la première zone de gradient, et le premier rayon de courbure augmentant de manière continue ou sous la forme d'une deuxième pluralité d'étapes jusqu'au troisième rayon de courbure dans la deuxième zone de gradient.

4. L'article en verre selon l'une quelconque des revendications précédentes, sachant que la vitre est en forme de V et comporte une première section plate et une deuxième section plate, la première zone plate terminale formant une transition entre le premier bord et la première section plate et la deuxième zone plate terminale formant une transition entre le deuxième bord et la deuxième section plate, la première zone plate terminale et la deuxième zone plate terminale ayant une largeur de 10 mm ou moins.

5. L'article en verre selon l'une quelconque des revendications précédentes, comportant en outre au moins un affichage collé sur la deuxième surface principale de la vitre.

6. L'article en verre selon la revendication 5, sachant que, vu depuis la première surface principale, ledit au moins un affichage présente une uniformité noire d'au moins 50 %.

7. L'article en verre selon la revendication 5 ou la revendication 6, comportant en outre un élément tampon disposé à proximité de l'au moins un affichage ;

la couche adhésive présentant un premier module d'élasticité et l'élément tampon présentant un deuxième module d'élasticité ; et
le deuxième module d'élasticité étant supérieur au premier module d'élasticité.

8. Procédé de formation d'un article en verre, comprenant :

le positionnement d'une vitre au-dessus d'un dispositif de serrage de traitement, la vitre ayant une première surface principale et une deuxième surface principale opposée à la première surface principale, le dispositif de serrage de traitement ayant une surface de formage définissant une courbure variable, la vitre étant positionnée de telle sorte que la première surface principale soit tournée vers la surface de formage ;
le cintrage de la vitre au-dessus du dispositif de serrage de traitement de telle sorte que la vitre épouse la courbure variable du dispositif de serrage de traitement ;
la fixation d'un cadre à la vitre par l'intermédiaire d'une couche adhésive afin de maintenir la courbure variable dans la vitre ;
la courbure variable dans la vitre présentant un rayon de courbure minimal à un sommet de la courbure variable et des zones de chaque côté du sommet avec un rayon de courbure supérieur au rayon de courbure minimal,
la courbure variable de la vitre présentant une première zone terminale plate s'étendant à partir de l'une des zones, et une deuxième zone terminale plate s'étendant à partir d'une autre des zones,
dans la première zone plate terminale, la première surface principale se transforme en un premier rayon de courbure supérieur à 10 m,
dans la deuxième zone plate terminale, la première surface principale se transforme en un deuxième rayon de courbure supérieur à 10 m,
la première surface principale, dans les première et deuxième zones plates terminales, ne s'écartant pas de plus de 100 $\mu$m de la planéité.

9. Le procédé selon la revendication 8, comprenant en outre l'application d'au moins un affichage sur la deuxième surface principale de la vitre.

10. Le procédé selon la revendication 9, comprenant en outre le positionnement d'un élément tampon dans la couche adhésive à proximité dudit au moins un affichage, l'élément tampon ayant un premier module et la couche adhésive ayant un deuxième module, le premier module étant supérieur au deuxième module.

11. Le procédé selon l'une quelconque des revendications 8 à 10, sachant que le rayon de courbure dans les zones de chaque côté du sommet augmente continuellement à mesure que la distance par rapport au sommet augmente.

**15**

FIG. 1

FIG. 2A

FIG. 2B

FIG. 3

FIG. 4A

FIG. 4B

R(θ)

R

FIG. 4C

CIRCLE R2300

CONSTANT RADIUS

VARIABLE RADIUS

Y COORDINATE (mm)

X COORDINATE (mm)

FIG. 5

FIG. 6

FIG. 7

VARIABLE RADIUS, EQV R250 FT 3.8

40 MICRON

SYMMETRY

Z-mm

X-mm

DEVIATION, μm

CONSTANT RADIUS, FT 3.8

240 MICRON

SYMMETRY

Z-mm

X-mm

DEVIATION, μm

FIG. 8

— CONSTANT RADIUS    —·— VARIABLE RADIUS

1ST PRINCIPAL STRESS, MPa

DISTANCE FROM CENTER, mm

FIG. 9

FIG. 10

DEVIATION (mm)

0.027687 MAX
-0.017493
-0.062674
-0.10785
-0.15304
-0.19822
-0.2434
-0.28858
-0.33376
-0.37894 MIN

Min

0.00      50.00      100.00 (mm)
     25.00      75.00

FIG. 11A

LL (FRACTION)

.212E-08
.258E-04
.515E-04
.773E-04
.103E-03
.129E-03
.155E-03
.180E-03
.206E-03
.232E-03

FIG. 11B

FIG. 11C

FIG. 11D

FIG. 12

FIG. 13

**EP 4 259 585 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63122664
- WO 2018075853 A1
- US 2018188869 A1
- WO 2017218652 A1